# EUROPEAN PATENT APPLICATION

(11) **EP 4 236 191 A1**
(43) Date of publication of application: **30.08.2023**
(21) Application number: 20958706.2
(22) Date of filing: 22.10.2020
(51) Int. Cl.: H04L 9/08

(54) **CONTROL METHOD, INFORMATION PROCESSING DEVICE, AND CONTROL PROGRAM**

(71) Applicant: FUJITSU LIMITED, Kawasaki-shi, Kanagawa 211-8588 (JP)
(72) Inventor: YASAKI, Koichi, Kawasaki-shi, Kanagawa 211-8588 (JP); YAMAMOTO, Dai, Kawasaki-shi, Kanagawa 211-8588 (JP)
(74) Representative: Hoffmann Eitle
(86) International application number: PCT/JP2020/039719
(87) International publication number: WO 2022/085154

(57) **Abstract**

Since distributed IDs do not have a control tower like a CA compared to centralized IDs, when a public key is compromised, the problematic public key remains in a repository for a long time, creating a risk of spoofing occurring in secure communication using the key. An information processing device executes processing of: detecting a risk to a first public key managed by a public key repository; performing update restriction of the first public key in response to the detection of the risk; authenticating an authenticator associated with the first public key; and releasing, in a case where the authentication of the authenticator succeeds, the update restriction. With this configuration, in one aspect, it is possible to suppress key update by a third party.

## Description

### FIELD

The present disclosure relates to a control method, an information processing device, and a control program.

### BACKGROUND

Distributed identifiers (IDs) managed by distributed network systems such as blockchains enable lower-cost and more flexible operation compared to centralized IDs managed by certification authorities (CAs) due absence of CAs.

On the other hand, in recent years, attacks have emerged that exploit shortcomings of key generation libraries, and there are cases where, once a target hardware security module (HSM) or key generation library is specified, a time to calculate a private key from a public key may be greatly shortened, resulting in rapid compromise of the public key.

### SUMMARY

### TECHNICAL PROBLEM

However, compared to the centralized IDs, the distributed IDs do not have a control tower like a CA. Thus, when a public key is compromised, the problematic public key remains in a repository for a long time, creating a risk of spoofing occurring in secure communication using the key.

In one aspect, an object is to provide a control method, an information processing device, and a control program capable of suppressing key update by a third party.

### SOLUTION TO PROBLEM

In a first idea, a computer executes processing of: detecting a risk to a first public key managed by a public key repository; performing update restriction of the first public key in response to the detection of the risk; authenticating an authenticator associated with the first public key; and releasing, in a case where the authentication of the authenticator succeeds, the update restriction.

### ADVANTAGEOUS EFFECTS OF INVENTION

In one aspect, it is possible to suppress key update by a third party.

### BRIEF DESCRIPTION OF DRAWINGS

FIG. 1 is a diagram illustrating an overall configuration example of a system according to a first embodiment;
FIG. 2 is a functional block diagram illustrating a functional configuration of an information processing device 10 according to the first embodiment;
FIG. 3 is a diagram illustrating an example of update control of a public key repository using a conventional technology;
FIG. 4 is a diagram illustrating an example of update control of a public key repository according to the first embodiment;
FIG. 5 is a diagram illustrating an example of history data stored in an authenticator 100 according to the first embodiment;
FIG. 6 is a diagram illustrating an example of history data stored in the information processing device 10 according to the first embodiment;
FIG. 7 is a diagram illustrating an example of key management data according to the first embodiment;
FIG. 8 (i.e., FIGs. 8A and 8B) is a flowchart illustrating a flow of update control processing of the public key repository according to the first embodiment; and
FIG. 9 is a diagram for describing a hardware configuration example of the information processing device 10.

### DESCRIPTION OF EMBODIMENTS

Hereinafter, an embodiment of a control method, an information processing device, and a control program disclosed in the present application will be described in detail with reference to the drawings. Note that this disclosure is not limited by this embodiment. Furthermore, each of the embodiments may be appropriately combined within a range without inconsistency.

### [Overall Configuration Example]

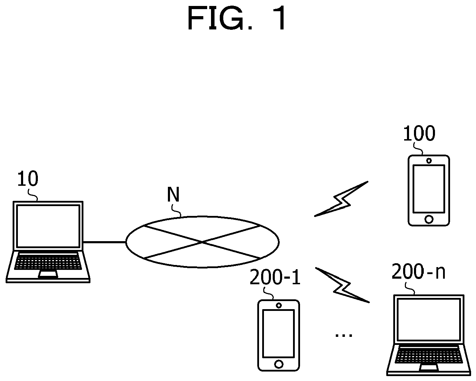

FIG. 1 is a diagram illustrating an overall configuration example of a system according to a first embodiment. As illustrated in FIG. 1, the present system is a system in which an information processing device 10, an authenticator 100, and user terminals 200-1 to 200-n (n is an optional integer, hereinafter collectively referred to as "user terminals 200") are coupled to each other in a communicable manner via a network N. Note that, as the network N, various communication networks such as the Internet may be adopted regardless of whether the communication network is wired or wireless.

The information processing device 10 is a device used by a servicer that has Lock/Unlock authority for a public key repository and is, for example, a provider of financial services or the like. The information processing device 10 may be a notebook personal computer (PC), a stationary terminal, or a mobile terminal such as a smartphone or a tablet PC. When the information processing device 10 detects a risk to a public key in the public key repository recorded and managed by a distributed ledger of a blockchain, or the like, the information processing device 10 restricts update of the target public key (Lock). Furthermore, when the authenticator 100 logs in to a service, the information processing device 10 authenticates the authenticator 100, and in a case where the authentication succeeds, releases the update restriction of the public key (Unlock).

The authenticator 100 is a device used by a creator of a public key in the public key repository, who is a legitimate owner of a private key. The authenticator 100 may be a notebook PC, a smartphone, or the like, or may be a USB token that is used by being coupled to a notebook PC or the like. The authenticator 100 receives a request to update a problematic public key from the information processing device 10. Furthermore, the authenticator 100 includes a hardware security module (HSM) and a key generation library, securely generates a public key, and uploads the generated public key to the public key repository.

The user terminal 200 is a terminal used by a user who uses services such as financial services, for example, provided by a servicer. The user terminal 200 may be a notebook PC, a smartphone, or the like. Each of the user terminals 200 stores a ledger of a blockchain, and the public key repository may be recorded by the ledger.

Note that the information processing device 10 and the authenticator 100 may also store the ledger of the blockchain and record the public key repository. Furthermore, processing on the public key repository recorded in the blockchain may be executed by using a smart contract. In this way, by managing the public key repository by the blockchain including the smart contract, security of the public key repository may be enhanced.

### [Functional Configuration of Information Processing Device 10]

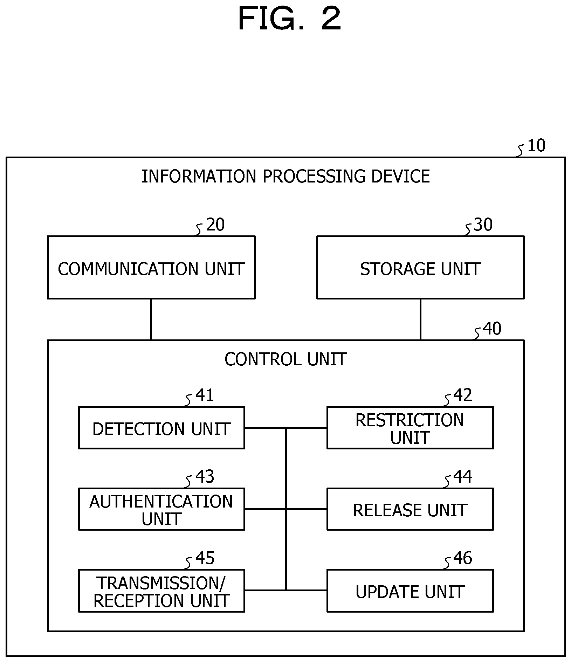

First, a functional configuration of the information processing device 10 serving as an execution subject of the control method disclosed in the present application will be described. FIG. 2 is a functional block diagram illustrating the functional configuration of the information processing device 10 according to the first embodiment. As illustrated in FIG. 2, the information processing device 10 includes a communication unit 20, a storage unit 30, and a control unit 40.

The communication unit 20 is a processing unit that controls communication with another device, and is, for example, a communication interface such as a network interface card.

The storage unit 30 is an example of a storage device that stores various types of data and a program to be executed by the control unit 40, and is, for example, a memory, a hard disk, or the like. The storage unit 30 stores, for example, history data such as the number of times of authentication used for authentication of the authenticator 100. Furthermore, the storage unit 30 may store a ledger of a blockchain. Note that the storage unit 30 may also store various types of data other than the specific examples described above.

The control unit 40 is a processing unit that is in charge of overall control of the information processing device 10, and is, for example, a processor or the like. The control unit 40 includes a detection unit 41, a restriction unit 42, an authentication unit 43, a release unit 44, a transmission/reception unit 45, and an update unit 46. Note that each of the processing units is an example of an electronic circuit included in the processor or an example of a process executed by the processor.

The detection unit 41 detects a risk to a public key managed by the public key repository. The detection of the risk may be performed based on information regarding vulnerability of the public key repository. Note that, as the information regarding the vulnerability of the repository, for example, which key generation library (algorithm) of which authenticator of which vendor has vulnerability, or the like is disclosed.

The restriction unit 42 performs, in response to the fact that the detection unit 41 has detected a risk to a public key, update restriction of the target public key. This, for example, locks the public key repository and restricts writing to the public key repository. With this configuration, update of the public key by spoofing in which a private key is calculated from the public key may be suppressed.

The authentication unit 43 authenticates the authenticator 100 associated with a public key. The authentication is performed to determine whether or not the authenticator 100 is a legitimate owner of a private key to the public key, and is performed by, for example, asking the authenticator 100 a question regarding the number of times of authentication performed by the authenticator 100 so far, and the like and determining whether or not the answer is correct.

The release unit 44 releases update restriction of a public key associated with the authenticator 100 in a case where authentication of the authenticator 100 by the authentication unit 43 succeeds. This, for example, unlocks the locked public key repository and enables writing to the public key repository. With this configuration, the public key may be updated by a legitimate authority while suppressing update of the public key by spoofing.

The transmission/reception unit 45 transmits a question for authentication of the authenticator 100 to the authenticator 100. Furthermore, the transmission/reception unit 45 receives an answer to the question from the authenticator 100. Note that the question for authentication of the authenticator 100 is created with respect to, for example, at least one of the number of times of past authentication of the authenticator 100, the number of times of registration of a public key in the public key repository by the authenticator 100, and the total number of the public keys associated with the authenticator 100, and is transmitted to the authenticator 100. Furthermore, the question for authentication of the authenticator 100 may be created and transmitted with respect to holding a private key corresponding to the public key. Note that the question for authentication of the authenticator 100 may be created and transmitted for each service using the public key.

Furthermore, the transmission/reception unit 45 transmits a request to update the public key to the authenticator 100 in a case where authentication of the authenticator 100 by the authentication unit 43 succeeds. Furthermore, the transmission/reception unit 45 receives a new public key for updating the old public key from the authenticator 100. Note that the processing of receiving the new public key from the authenticator 100 includes processing of receiving, from the authenticator 100, the new public key using a public key cryptosystem different from a public key cryptosystem used for the old public key. Here, the public key cryptosystem is, for example, RSA encryption or elliptic curve cryptography. By using a different public key cryptosystem each time the public key is updated, security of the public key may be enhanced.

The update unit 46 updates an old public key in the public key repository with a new public key received from the authenticator 100 by the transmission/reception unit 45.

### [Details of Processing]

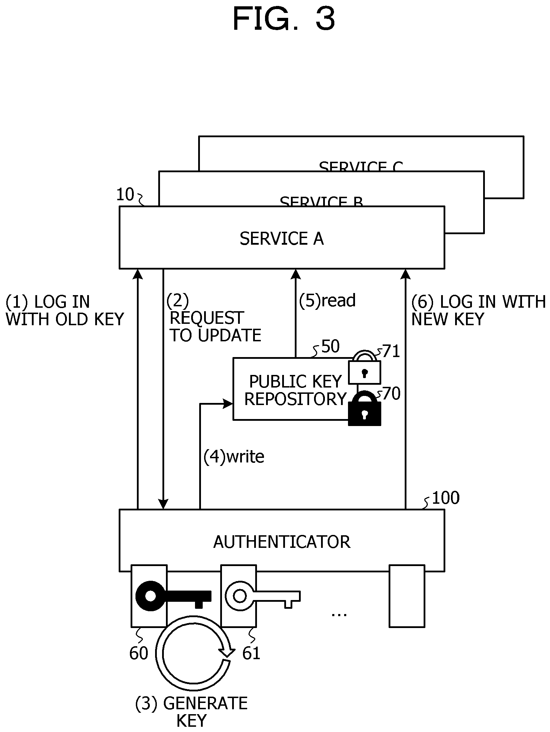

Next, update control of the public key repository will be described in detail. First, update control of a public key repository using a conventional technology will be described. FIG. 3 is a diagram illustrating an example of the update control of the public key repository using the conventional technology. As a premise, a public key is generated for each service that uses the public key, and in a case where a risk to the public key is detected, a servicer that is a provider of the corresponding service becomes responsible for repairing the problematic public key.

First, as illustrated in FIG. 3, the authenticator 100 uses a private key 60 corresponding to a public key 70 currently available in a public key repository 50 to log in to a service A provided by the information processing device 10.

Next, in a case where a risk to the public key 70 associated with the logged-in authenticator 100 is detected, in other words, in a case where the public key 70 is a problematic key, the information processing device 10 transmits a request to update the public key to the authenticator 100. Note that the authenticator 100 does not know that the public key 70 is a problematic key until the authenticator 100 logs in to the service A and is notified by the information processing device 10. Therefore, the problematic public key 70 remains in an available state in the public key repository 50 for a long time.

Next, when receiving the request to update, the authenticator 100 generates a new public key 71 corresponding to a new private key 61, and writes the generated new public key 71 to the public key repository 50. With this configuration, the problematic public key 70 is updated to the new public key 71. Then, the new public key 71 becomes available in the service A. Furthermore, thereafter, the authenticator 100 logs in to the service A by using the new private key 61.

However, until the old public key 70 in the public key repository 50 is updated, spoofing in which the private key 60 is calculated from the public key 70 may illegally log in to the service A and carry out attacks such as illegally updating the public key 70 in the public key repository 50. During this time, when the problematic public key 70 is deleted from the public key repository 50, a public key needs to be re-registered, which reduces convenience. Therefore, in the first embodiment, in a case where a problem occurs in a public key included in the public key repository 50, authentication strength of the public key repository 50 is increased to suppress key update by a third party.

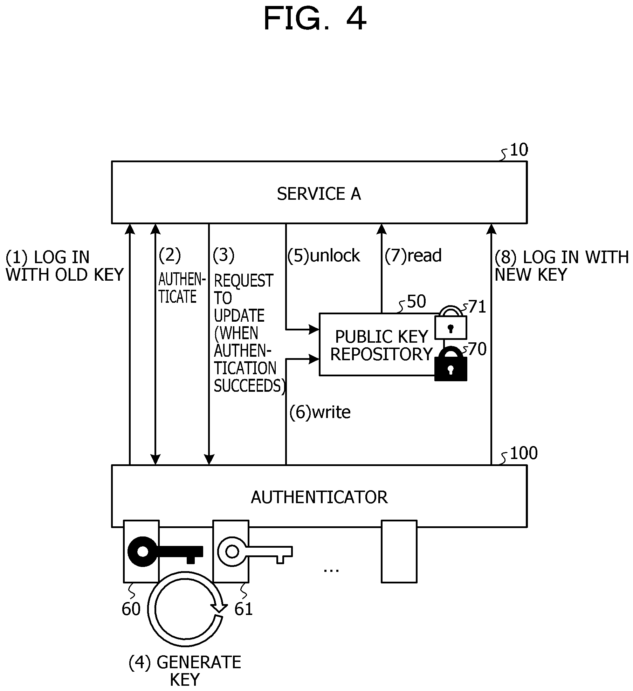

FIG. 4 is a diagram illustrating an example of update control of the public key repository according to the first embodiment. As a premise, when a risk to a public key in the public key repository 50 is detected, the information processing device 10 locks the public key repository 50, and performs update restriction of the problematic public key. In the example of FIG. 4, the problematic public key is a public key 70, similarly to the update control using the conventional technology illustrated in FIG. 3.

First, as illustrated in FIG. 4, the authenticator 100 uses a private key 60 corresponding to the public key 70 currently available in the public key repository 50 to log in to the service A provided by the information processing device 10. This is similar to the update control using the conventional technology illustrated in FIG. 3.

Next, the information processing device 10 authenticates the authenticator 100, and determines whether or not the authenticator 100 is a legitimate owner of the private key 60. Incidentally, when the authentication here is authentication with the private key 60, there is a possibility that the private key 60 has already been calculated by spoofing. Therefore, the authentication is performed by, for example, asking the authenticator 100 a question regarding the number of times of authentication performed by the authenticator 100 so far, and the like and determining whether or not the answer is correct.

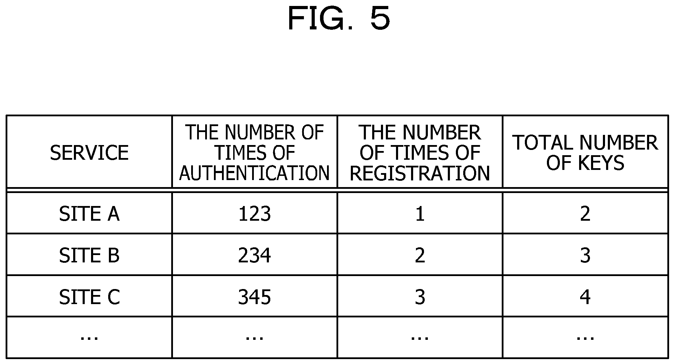

FIG. 5 is a diagram illustrating an example of history data stored in the authenticator 100 according to the first embodiment. As illustrated in FIG. 5, as the history data, the authenticator 100 holds, for example, for each service, the number of times of past authentication of the authenticator 100, the number of times of registration of the public key in the public key repository 50 by the authenticator 100, and the total number of the public keys associated with the authenticator 100. Then, the authenticator 100 updates the history data each time authentication or registration of a public key is performed.

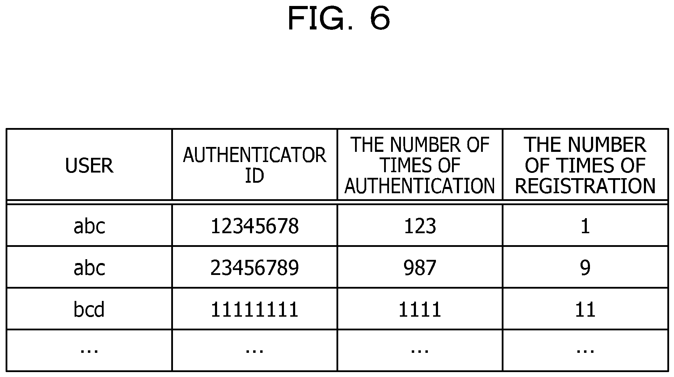

On the other hand, FIG. 6 is a diagram illustrating an example of history data stored in the information processing device 10 according to the first embodiment. As illustrated in FIG. 6, as the history data, the information processing device 10 holds, for example, for each authenticator 100, the number of times of past authentication of the authenticator 100 and the number of times of registration of the public key in the public key repository 50 by the authenticator 100. Furthermore, since the same user may use a plurality of authenticators 100, an identifier of the user may also be held.

The information processing device 10 uses the history data as illustrated in FIG. 6 to transmit a question to the authenticator 100 in the form of, for example, the number of times of authentication × 5 + the number of times of registration × 100, or the like. Note that the format of the question is not fixed, and may be changed each time.

On the other hand, when receiving the question, the authenticator 100 uses the held history data as illustrated in FIG. 5 to calculate an answer to the question and transmit the answer to the information processing device 10. Then, the information processing device 10 determines whether or not the answer is correct, and in a case where the answer is correct, determines that the authentication of the authenticator 100 succeeds. In this way, since the history data is data that may only be known by the information processing device 10 that performs authentication and the legitimate authenticator 100, the information processing device 10 may perform stronger authentication.

Note that the authentication of the authenticator 100 may use other authentication methods alternatively or in combination instead of the form of the question and answer described above. For example, the information processing device 10 may authenticate the authenticator 100 by confirming one or a plurality of private keys held by the authenticator 100. Furthermore, the information processing device 10 may authenticate the authenticator 100 by, for example, transmitting a confirmation code that is a random number to the authenticator 100 or another device used by a user of the authenticator 100, and having the confirmation code input via the authenticator 100.

Next, in a case where the authentication of the authenticator 100 succeeds, the information processing device 10 transmits a request to update the public key to the authenticator 100. Note that, similarly to the update control using the conventional technology illustrated in FIG. 3, the authenticator 100 does not know that the public key 70 is a problematic key until the authenticator 100 logs in to the service A and is notified by the information processing device 10. However, since the public key repository 50 is in a Lock state as described above and update of the problematic public key 70 is restricted, malicious update of the public key 70 by spoofing is suppressed.

Next, when receiving the request to update, the authenticator 100 generates a new public key 71 corresponding to a new private key 61. In parallel, in a case where the authentication of the authenticator 100 succeeds, the information processing device 10 unlocks the public key repository 50 and releases the update restriction of the public key 70. Then, the authenticator 100 writes the new public key 71 to the public key repository 50. With this configuration, the problematic public key 70 is updated to the new public key 71. In this way, since timing at which the public key 70 may be updated is a short time from when the authentication of the authenticator 100 succeeds to when the public key 70 is updated to the new public key 71, update of the public key 70 due to spoofing may be suppressed compared to the update control using the conventional technology illustrated in FIG. 3.

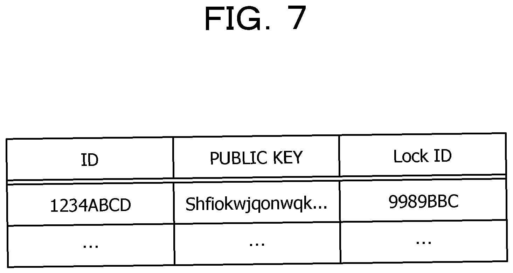

Note that Lock and Unlock of the public key repository 50 are performed for each servicer that provides a service using a public key. In other words, naturally, it is not possible for the servicer to participate in update of a public key other than the public key used in the service the servicer provides. Therefore, control is performed so that, for example, besides a public key, an identifier of a servicer that has authority to execute update restriction of the public key is stored in a ledger of a blockchain, and only Lock or Unlock from the legitimate servicer that has the authority to execute the update restriction of the target public key is accepted. FIG. 7 is a diagram illustrating an example of key management data according to the first embodiment. In the example of FIG. 7, Lock ID is an identifier of a servicer.

### [Flow of Processing]

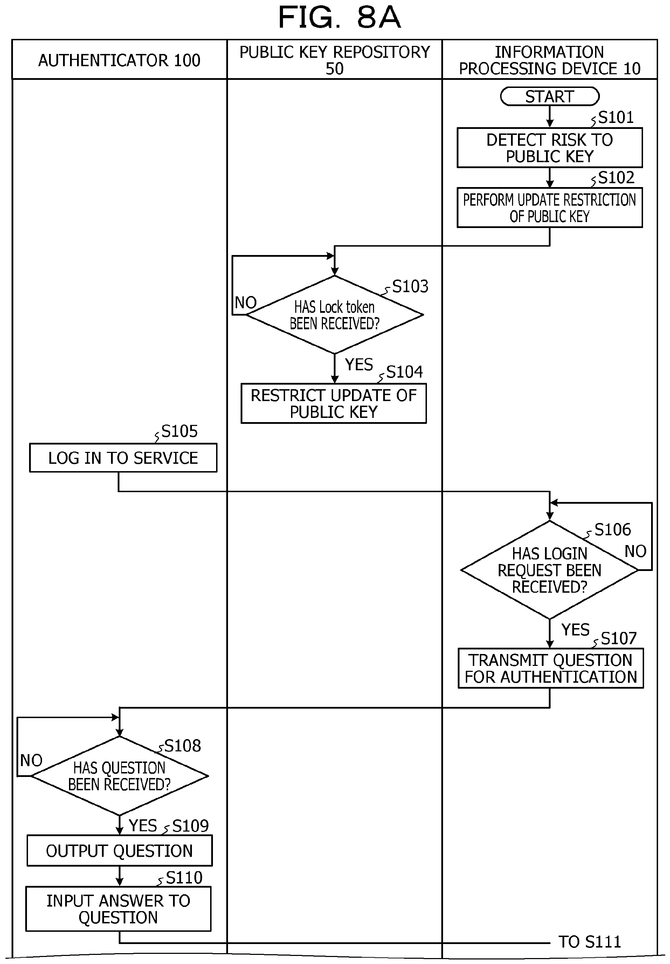

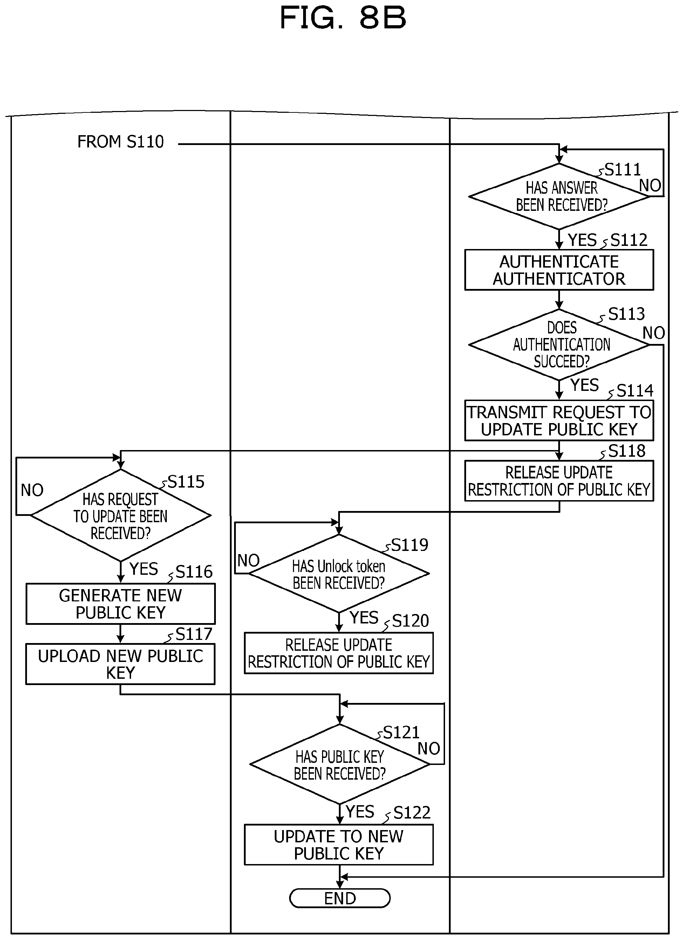

Next, update control processing of the public key repository 50 will be described along a flow of the processing. FIG. 8 (i.e., FIGs. 8A and 8B) is a flowchart illustrating the flow of the update control processing of the public key repository according to the first embodiment.

First, as illustrated in FIG. 8, the information processing device 10 detects a risk to a public key (Step S101). This, for example, acquires and searches for information regarding vulnerability of the public key repository 50 that has been disclosed, and detects that the public key involved in an own service is a problematic public key.

Next, update restriction of the public key for which the risk is detected in Step S101 is performed (Step S102). This, for example, transmits a Lock token designating the problematic public key to the public key repository 50.

Next, in a case where the public key repository 50 has not received the Lock token from the information processing device 10 (Step S103: No), the public key repository 50 waits for reception of the Lock token. On the other hand, in a case where the Lock token has been received (Step S103: Yes), the public key repository 50 restricts update of the problematic public key (Step S104).

Next, the authenticator 100 uses a private key associated with the service to log in to the service provided by the information processing device 10 (Step S105).

Next, in a case where the information processing device 10 has not received a login request for the service from the authenticator 100 (Step S106: No), the information processing device 10 waits for reception of the login request. On the other hand, in a case where the login request has been received (Step S106: Yes), the information processing device 10 generates a question for authentication of the authenticator 100, and transmits the question to the authenticator 100 (Step S107). The question for authentication is generated by using history data held by the information processing device 10, such as that illustrated in FIG. 6, for example.

Next, in a case where the authenticator 100 has not received the question for authentication from the information processing device 10 (Step S108: No), the authenticator 100 waits for reception of the question for authentication. On the other hand, in a case where the question for authentication has been received (Step S108: Yes), the authenticator 100 outputs the received question for authentication (Step S109).

Next, the authenticator 100 inputs an answer to the question (Step S110). The answer to the question is generated based on the received question for authentication, by using history data held by the authenticator 100, such as that illustrated in FIG. 7, for example. The input answer is transmitted to the information processing device 10 by the authenticator 100.

Next, in a case where the information processing device 10 has not received the answer to the question from the authenticator 100 (Step S111: No), the information processing device 10 waits for reception of the answer to the question. On the other hand, in a case where the answer to the question has been received (Step S111: Yes), the information processing device 10 determines whether or not the answer is correct based on the received answer, and authenticates the authenticator 100 (Step S112).

In a case where the authentication of the authenticator 100 fails (Step S113: No), an error message indicating the authentication failure is transmitted to the authenticator 100, or the like, and the update control processing of the public key repository 50 illustrated in FIG. 8 ends.

On the other hand, in a case where the authentication of the authenticator 100 succeeds (Step S113: Yes), the information processing device 10 transmits, to the authenticator 100, a request to update the problematic public key for which the risk is detected in Step S101 (Step S114).

Next, in a case where the authenticator 100 has not received the request to update the public key from the information processing device 10 (Step S115: No), the authenticator 100 waits for reception of the request to update the public key. On the other hand, in a case where the request to update the public key has been received (Step S115: Yes), the authenticator 100 generates a new public key (Step S116). Note that the new public key may be generated by using a public key cryptosystem different from a public key cryptosystem used for the old public key.

Next, the authenticator 100 uploads the generated new public key to the public key repository 50 (Step S117).

Furthermore, in a case where the authentication of the authenticator 100 succeeds (Step S113: Yes), in parallel with Step S114, the information processing device 10 releases the update restriction of the problematic public key for which the risk is detected in Step S101 (Step S118). This, for example, transmits an Unlock token designating the problematic public key to the public key repository 50.

Next, in a case where the public key repository 50 has not received the Unlock token from the information processing device 10 (Step S119: No), the public key repository 50 waits for reception of the Unlock token. On the other hand, in a case where the Unlock token has been received (Step S119: Yes), the public key repository 50 releases the update restriction of the problematic public key (Step S120).

Next, in a case where the public key repository 50 has not received the new public key from the authenticator 100 (Step S121: No), the public key repository 50 waits for reception of the new public key. On the other hand, in a case where the new public key has been received (Step S121: Yes), the public key repository 50 updates the problematic public key to the received new public key (Step S122). After the execution of Step S122, the update control processing of the public key repository 50 illustrated in FIG. 8 ends.

### [Effects]

As described above, the information processing device 10 executes processing of detecting a risk to a public key managed by the public key repository 50, performing update restriction of the public key in response to the detection of the risk, authenticating the authenticator 100 associated with the public key, and releasing, in a case where the authentication of the authenticator 100 succeeds, the update restriction of the public key.

With this configuration, since update of the public key is restricted until the authentication of the authenticator 100 succeeds, update of the public key by a third party may be suppressed.

Furthermore, the information processing device 10 further executes processing of transmitting, in a case where the authentication of the authenticator 100 succeeds, a request to update the public key to the authenticator 100, receiving a new public key for updating the public key from the authenticator 100, and updating the public key to the new public key.

With this configuration, since timing at which the public key may be updated is a short time from when the authentication of the authenticator 100 succeeds to when the public key is updated to the new public key, update of the public key by a third party may be suppressed.

Furthermore, the information processing device 10 further executes processing of transmitting a question for authentication of the authenticator 100 to the authenticator 100, and receiving an answer to the question from the authenticator 100. Furthermore, the processing of authenticating the authenticator 100, which is executed by the information processing device 10, includes processing of determining whether or not the answer is correct, and determining, in a case where it is determined that the answer is correct, that the authentication of the authenticator 100 succeeds.

With this configuration, strong authentication may be performed for the public key repository 50, and update of the public key by a third party may be suppressed.

Furthermore, the processing of transmitting the question to the authenticator 100, which is executed by the information processing device 10, includes processing of transmitting, to the authenticator 100, the question regarding at least one of the number of times of past authentication of the authenticator 100, the number of times of registration of the public key, the total number of the public keys associated with the authenticator 100, and holding a private key corresponding to the public key.

With this configuration, stronger authentication may be performed for the public key repository 50, and update of the public key by a third party may be suppressed.

Furthermore, the processing of transmitting the question to the authenticator 100, which is executed by the information processing device 10, includes processing of transmitting the question for each service using the public key to the authenticator 100.

With this configuration, stronger authentication may be performed for each service for the public key repository 50, and update of the public key by a third party may be suppressed.

Furthermore, the processing of detecting the risk, which is executed by the information processing device 10, includes processing of acquiring information regarding vulnerability of the repository.

With this configuration, in response to the detection of the risk to the public key, update restriction of the target public key may be performed, and update of the public key by a third party may be suppressed.

Furthermore, the processing of receiving the public key from the authenticator 100, which is executed by the information processing device 10, includes processing of receiving, from the authenticator 100, the public key using a public key cryptosystem different from a public key cryptosystem used for the public key.

With this configuration, security of the public key may be enhanced.

Furthermore, in the information processing device 10, the update restriction and the release of the public key in the public key repository 50 is executed in a case where at least the public key and an identifier of authority that has authority to execute the update restriction are stored and the information processing device 10 is determined to be the legitimate authority by using key management data recorded in a ledger of a blockchain.

With this configuration, a servicer may participate only in update of a public key used in a service the servicer provides. In other words, it is possible to perform control so that the target servicer may not participate in update of a public key other than a public key used in the service the servicer itself provides.

Furthermore, the information processing device 10 detects a risk to a public key managed by a public key repository, authenticates the authenticator 100 associated with the public key, transmits, in a case where the authentication of the authenticator 100 succeeds, a request to update the public key to the authenticator 100, receives a new public key for updating the public key from the authenticator 100, and updates the public key to the new public key.

With this configuration, update of the public key by a third party may be suppressed.

### [System]

Pieces of information including a processing procedure, a control procedure, a specific name, various types of data, and parameters described above or illustrated in the drawings may be optionally changed unless otherwise noted. Furthermore, the specific examples, distributions, numerical values, and the like described in the embodiment are merely examples, and may be optionally changed.

Furthermore, each component of each device illustrated in the drawings is functionally conceptual, and does not necessarily have to be physically configured as illustrated in the drawings. In other words, specific modes of distribution and integration of the respective devices are not limited to those illustrated in the drawings. That is, all or a part of the devices may be configured by being functionally or physically distributed or integrated in optional units, according to various types of loads, use situations, or the like. For example, the detection unit 41 and the release unit 44 of the information processing device 10 may be integrated.

Moreover, all or an optional part of the respective processing functions performed in each device may be implemented by a CPU and a program analyzed and executed by the CPU, or may be implemented as hardware by wired logic.

### [Hardware]

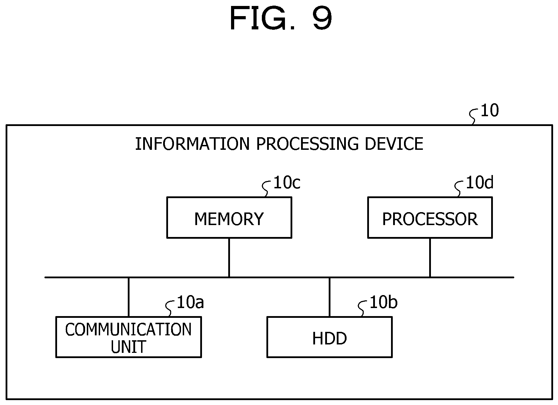

A hardware configuration of the information processing device 10 described above will be described. FIG. 9 is a diagram illustrating a hardware configuration example of the information processing device 10. As illustrated in FIG. 9, the information processing device 10 includes a communication unit 10a, a hard disk drive (HDD) 10b, a memory 10c, and a processor 10d. Furthermore, the respective units illustrated in FIG. 9 are coupled to each other by a bus or the like.

The communication unit 10a is a network interface card or the like, and communicates with another server. The HDD 10b stores programs and data that operate the respective functions illustrated in FIG. 2.

The processor 10d reads, from the HDD 10b or the like, a program that executes processing similar to that of each processing unit illustrated in FIG. 2, and loads the read program into the memory 10c, thereby operating a process that executes each function described with reference to FIG. 2. For example, this process executes a function similar to that of each processing unit included in the information processing device 10. Specifically, for example, the processor 10d reads, from the HDD 10b or the like, a program having functions similar to those of the detection unit 41, the restriction unit 42, and the like. Then, the processor 10d executes a process that executes processing similar to that of the detection unit 41, the restriction unit 42, and the like.

In this way, the information processing device 10 operates as an information processing device that executes each processing by reading and executing the program. Furthermore, the information processing device 10 may also implement functions similar to those of the embodiment described above by reading the program described above from a recording medium with a medium reading device and executing the read program described above. Note that the program referred to in other embodiments is not limited to being executed by the information processing device 10. For example, the present invention may be similarly applied also to a case where another computer or server executes the program, or a case where these computer and server cooperatively execute the program.

Note that this program may be distributed via a network such as the Internet. Furthermore, this program may be recorded in a computerreadable recording medium such as a hard disk, a flexible disk (FD), a CD-ROM, a magneto-optical disk (MO), or a digital versatile disc (DVD), and may be executed by being read from the recording medium by a computer.

### INDUSTRIAL APPLICABILITY

Incidentally, while the embodiment of the present disclosure has been described above, the present disclosure may be implemented in a variety of different modes in addition to the embodiment described above.

### CITATION LIST

### PATENT DOCUMENT

Patent Document 1: Japanese Laid-open Patent Publication No. 2018-074205
Patent Document 2: Japanese Laid-open Patent Publication No. 2018-182487
Patent Document 3: U.S. Patent Application Publication No. 2017/0373847

### REFERENCE SIGNS LIST

| | |
|---|---|
| 10 | Information processing device |
| 10a | Communication unit |
| 10b | HDD |
| 10c | Memory |
| 10d | Processor |
| 20 | Communication unit |
| 30 | Storage unit |
| 40 | Control unit |
| 41 | Detection unit |
| 42 | Restriction unit |
| 43 | Authentication unit |
| 44 | Release unit |
| 45 | Transmission/reception unit |
| 46 | Update unit |
| 50 | Public key repository |
| 60 | Private key |
| 61 | Private key |
| 70 | Public key |
| 71 | Public key |
| 100 | Authenticator |
| 200 | User terminal |

## Claims

1. A control method executed by a computer, the method comprising:
detecting a risk to a first public key managed by a public key repository;
performing update restriction of the first public key in response to the detection of the risk;
authenticating an authenticator associated with the first public key; and
releasing, in a case where the authentication of the authenticator succeeds, the update restriction.

2. The control method according to claim 1, the method further comprising:
transmitting, in a case where the authentication of the authenticator succeeds, a request to update the first public key to the authenticator;
receiving a second public key to update the first public key from the authenticator; and
updating the first public key to the second public key.

3. The control method according to claim 1, the method further comprising:
transmitting a question for authentication of the authenticator to the authenticator; and
receiving an answer to the question from the authenticator,
wherein the processing of authenticating the authenticator includes processing of:
determining whether or not the answer is correct; and
determining, in a case where it is determined that the answer is correct, that the authentication of the authenticator succeeds.

4. The control method according to claim 3, wherein the transmitting of the question to the authenticator includes transmitting, to the authenticator, the question regarding the number of times of past authentication of the authenticator, the number of times of registration of the public key, a total number of the public keys associated with the authenticator, or hold of a private key that corresponds to the first public key, or any combination thereof.

5. The control method according to claim 3 or 4, wherein the transmitting of the question to the authenticator includes processing of transmitting the question for each service that uses the first public key to the authenticator.

6. The control method according to claim 1, wherein the detecting of the risk includes processing of acquiring information regarding vulnerability of the repository.

7. The control method according to claim 2, wherein the receiving of the second public key from the authenticator includes processing of receiving, from the authenticator, the second public key that uses a second public key cryptosystem different from a first public key cryptosystem used for the first public key.

8. The control method according to claim 1, wherein the update restriction and the release of the first public key in the repository is executed in a case where at least the first public key and an identifier of authority that has authority to execute the update restriction are stored and the computer is determined to be the legitimate authority by using key management data recorded in a ledger of a blockchain.

9. A control method executed by a computer, the method comprising:
detecting a risk to a first public key managed by a public key repository;
authenticating an authenticator associated with the first public key;
transmitting, in a case where the authentication of the authenticator succeeds, a request to update the first public key to the authenticator;
receiving a second public key to update the first public key from the authenticator; and
updating the first public key to the second public key.

10. An information processing device comprising:
a detection unit that detects a risk to a first public key managed by a public key repository;
a restriction unit that performs update restriction of the first public key in response to the detection of the risk;
an authentication unit that authenticates an authenticator associated with the first public key; and
a release unit that releases, in a case where the authentication of the authenticator succeeds, the update restriction.

11. A control program for causing a computer to perform processing, the processing comprising:
detecting a risk to a first public key managed by a public key repository;
performing update restriction of the first public key in response to the detection of the risk;
authenticating an authenticator associated with the first public key; and
releasing, in a case where the authentication of the authenticator succeeds, the update restriction.

12. An information processing device comprising:
a detection unit that detects a risk to a first public key managed by a public key repository;
an authentication unit that authenticates an authenticator associated with the first public key;
a transmission/reception unit that
transmits, in a case where the authentication of the authenticator succeeds, a request to update the first public key to the authenticator, and
receives a second public key to update the first public key from the authenticator; and
an update unit that updates the first public key to the second public key.

13. A control program for causing a computer to perform processing, the processing comprising:
detecting a risk to a first public key managed by a public key repository;
authenticating an authenticator associated with the first public key;
transmitting, in a case where the authentication of the authenticator succeeds, a request to update the first public key to the authenticator;
receiving a second public key to update the first public key from the authenticator; and
updating the first public key to the second public key.
